Europäisches Patentamt

European Patent Office

Office européen des brevets

(11) Veröffentlichungsnummer: **0 243 862 B1**

(12) **EUROPÄISCHE PATENTSCHRIFT**

(45) Veröffentlichungstag der Patentschrift: **15.04.92**

(21) Anmeldenummer: **87105877.2**

(22) Anmeldetag: **22.04.87**

(51) Int. Cl.⁵: **H02M 3/335**

(54) **Elektrischer Wandler.**

(30) Priorität: **29.04.86 DE 3614492**

(43) Veröffentlichungstag der Anmeldung:
**04.11.87 Patentblatt 87/45**

(45) Bekanntmachung des Hinweises auf die
Patenterteilung:
**15.04.92 Patentblatt 92/16**

(84) Benannte Vertragsstaaten:
**AT BE CH DE ES FR GB GR IT LI LU NL SE**

(56) Entgegenhaltungen:
**DE-A- 3 202 600**
**FR-A- 2 464 543**

(73) Patentinhaber: **EWD Electronic-Werke
Deutschland GmbH**

**W-7730 Villingen-Schwenningen(DE)**

(72) Erfinder: **Goseberg, Walter, Dipl.-Ing.
Kopenhagener Strasse 81
W-3000 Hannover 91(DE)**
Erfinder: **Zdarek, Drahoslav, Dipl.-Ing.
Einbeckhauser Strasse 3
W-3000 Hannover 91(DE)**
Erfinder: **Von der Ohe, Wilfried, Dipl.-Ing.
Holtenser Weg 35
W-3257 Springe 5(DE)**

(74) Vertreter: **Einsel, Robert, Dipl.-Ing.
E W D Electronic-Werke Deutschland GmbH
Patent- und Lizenzabteilung Göttinger
Chaussee 76
W-3000 Hannover 91(DE)**

## Beschreibung

Die Erfindung betrifft einen elektrischen Wandler gemäß dem Oberbegriff des Anspruchs 1.

Bei elektrischen Wandlern ist es bekannt, eine Wicklung über einen von einer Steuerschaltung periodisch leitend bzw. gesperrt gesteuerten Schalttransistor an eine Betriebsgleichspannung zu legen. Es können mehrere Wicklungen zum Abgreifen gewünschter Sekundärspannungen vorgesehen sein. Bei derartigen Wandlern hat der Strom durch die (Primär-) Wicklung im allgemeinen eine Gleichstromkomponente. Das bedeutet, daß in der Kennlinie, die die Abhängigkeit der magnetischen Induktion B von der Feldstärke H dargestellt, der im wesentlichen lineare Teil der Hysteresiskurve zwischen dem positiven und dem negativen Endwert der Induktion B nicht optimal ausgenutzt werden kann, ohne daß der zur Erhöhung der Induktivität vorgesehene Kern in die Sättigung gelangt.

Um die Sättigung in Richtung auf höhere absolute Werte der Feldstärke H zu verschieben, ist es bekannt, den im wesentlichen in sich geschlossen verlaufenden Kern mit einem Luftspalt versehen auszubilden. Dadurch treten jedoch beim Betrieb des Wandlers in der Umgebung des Luftspaltes nachteilig magnetische Streufelder auf, die in der Nähe des Wandlers angeordnete Komponenten in unerwünschter Weise beeinflussen können.

Es ist ferner bekannt, in den Weg des Kerns einen Permanentmagneten einzufügen, der in dem Kern einen magnetischen Gleichfluß erzeugt, d.h. im Sinne einer Vorspannung den Kern vormagnetisiert. Ändert sich beispielsweise bei einem Schaltnetzteil-Transformatorder Primärstrom nur zwischen null und einem positiven Wert, so wird der Transformatorkern durch den Permanentmagneten vorzugsweise so vorgespannt, daß er im Ruhezustand eine negative Induktion in der Nähe der Sättigung, also in der Nähe des waagerecht verlaufenden Teils der Hysteresiskurve aufweise, so daß dann der lineare Teil bis zum maximalen Grenzwert der Induktion durch den in positiver Richtung ansteigenden Strom voll ausgenutzt werden kann. Die Stellen, an denen ein Permanentmagnet in den Weg des Kerns eingefügt ist, wirken jedoch beim Betrieb des Wandlers wie Luftspalte, so daß die oben erwähnten Nachteile der Luftspalte auch hier zum Tragen kommen.

Sind etwa Schaltnetzteil- und/oder Zeilentransformatoren für Fernsehgeräte in zu geringer Nachbarschaft zur Bildröhre angeordnet, so kann es wegen des Permanentmagneten zu statischen sowie wegen schwankender Werte der im Transformator zu übertragenden Leistung zu dynamischen ("Ton im Bild") Fehlern bei der Abbildung kommen. Es können beispielsweise Farbreinheitsfehler und Bildverzerrungen auftreten.

Bei Schaltnetzteil- und/oder Zeilentransformatoren ist daher bereits vorgeschlagen worden, den einerseits wegen Erhöhung der Sättigungsgrenze und einfacher Realisierbarkeit vorteilhaften, andererseits aber wegen der magnetischen Streufelder nachteiligen Luftspalt an einer Stelle des Transformatorkerns vorzusehen, die ringsum und über die gesamte Höhe des Luftspaltes von einem Spulenkörper des Transformators umgeben ist. Der zum Erzielen einer magnetischen Vorspannung des Transformatorkerns vorgesehene Permanentmagnet ist bei diesem Vorschlag in diesen Luftspalt eingefügt. Dieser zunächst überzeugend wirkend Vorschlag stößt jedoch in der Praxis recht schnell an seine Grenzen. Steigt nämlich beispielsweise durch einen auftretenden Fehler, etwa aufgrund eines Durchschlags der Kollektor-Emitter-Strecke des Schalttransistors, der Strom durch die Primärwicklung unzulässig an, z.B. von 5 A auf Werte von 20 - 30 A, so kann es entsprechend der Koerzitivkraft des Permanentmagneten zu einer Entmagnetisierung oder Umpolung des Permanentmagneten kommen. Der vom Permanentmagneten eingestellte Arbeitspunkt auf der Magentisierungskennlinie liegt dann falsch, der Transformator wäre dann nicht mehr brauchbar.

Es sind auch schon Drosseln mit Drosselkern-Anordnungen vorgeschlagen worden (DE-OS 32 02 600), bei denen Permanentmagnete in den Außenraum der Spule verlagert sind. Ob ein Zerstören von Permanentmagneten verhindert werden soll oder kann, ist hierbei nicht explizit ausgeführt worden. Auch sind bei diesen bekannten Drosseln gegen auftretende Streustrahlung keine besonderen Vorkehrungen getroffen.

Der Erfindung liegt die Aufgabe zugrunde, bei einem elektrischen Wandler der eingangs genannten Art ungünstige Auswirkungen auf in seiner Nachbarschaft angeordnete elektronische Komponenten weitgehend zu vermeiden.

Diese Aufgabe wird durch die im unabhängigen Anspruch 1 angegebene Erfindung gelöst. Vorteilhafte Weiterbildungen der Erfindung sind in den abhängigen Unteransprüchen angegeben.

Es ist auch ein Übertrager zur Übertragung magnetischer Energie bekannt (FR-A-2 464 543), bei dem zur Erhöhung der durch einen pulsierenden Gleichstrom übertragbaren Energie ein Permanentmagnet im Mittelschenkel eines EE-Kerns schräg zur Längsrichtung des Schenkels angeordnet ist. Die Aufgabe, die Auswirkung eines Transformators auf in seiner Nachbarschaft angeordnete elektronische Komponenten zu vermeiden, wird dort jedoch nicht behandelt. Auch über die Bemessung des Permanentmagneten sowie eines zusätzlich vorhandenen Luftspaltes ist dort nichts ausgesagt.

Bei der erfindungsgemäßen Lösung ist also vorteilhaft ein praktikabler Kompromiß gefunden zwischen einander entgegenstehenden Forderungen, nämlich einerseits zum Erzeugen einer geeigneten Vormagnetisierung des Kerns den Permanentmagneten an einer Stelle vorzusehen, wo er zum Schutz vor Um- oder Entmagnetisierung entfernt von den Spulen in den Weg des Kerns eingefügt ist, und andererseits die von den hierdurch im Kern verursachten Spalten ausgehende Streustrahlung relativ klein zu halten.

Weist der Kern überdies noch einen Luftspalt auf, so ist dieser Luftspalt erfindungsgemäß an einem eine Spule aufweisenden Schenkel des Kerns vorgesehen. Hierdurch ist ein weiterer Kompromiß gefunden zwischen einander entgegenstehenden Forderungen, nämlich einerseits zur Erhöhung der Sättigungsgrenze des Kernes einen großen Luftspalt vorzusehen bzw. andererseits zur Verhinderung magnetischer Streufelder möglichst keinen Luftspalt vorzusehen. Da der Luftspalt an einem eine Spule aufweisenden Schenkel angeordnet ist, verläuft ein großer Teil der hierdurch verursachten magnetischen Streufelder in einem Bereich, in welchem die Spule oder - in deren Außenraum - Teile des Kerns angeordnet sind und der daher ohnehin für andere Komponenten, die von den Streufeldern beeinträchtigt werden könnten, nicht zur Verfügung steht.

Sind gemäß der Erfindung sowohl der Luftspalt als auch der oder die Permanentmagnete an den genannten Stellen am Kern angeordnet, so ergibt sich jedoch noch ein weiterer Vorteil. Bei einer Anordnung nur mit Luftspalt oder nur mit Permanentmagneten erreichen nämlich nicht alle Schenkel des Kerns zur gleichen Zeit ihre Sättigungsgrenze. Der den Luftspalt aufweisende Schenkel befindet sich beispielsweise noch in dem im wesentlichen linear verlaufenden Aussteuerungsbereich der entsprechenden Hysteresiskurve, während die übrigen Schenkel des Kerns - sofern keine Permanentmagnete vorgesehen wären - bereits in den Bereich ihrer magnetischen Sättigung gelangen. Durch das Anordnen der Magnete wird jedoch auch in diesen Teilen des Kerns die Sättigungsgrenze erst später erreicht, vorzugsweise ungefähr gleichzeitig mit dem Erreichen der Sättigungsgrenze in dem den Luftspalt aufweisenden Schenkel des Kerns.

Weitere Vorteile und Merkmale der Erfindung werden nachfolgend anhand der Zeichnung an einem bevorzugten Ausführungsbeispiel erläutert. Darin zeigen:

Fig. 1     eine Grundschaltung für einen Schaltnetzteil-Transformator und

Fig. 2     den Aufbau eines erfindungsgemäß ausgebildeten Schaltnetzteil-Transformators.

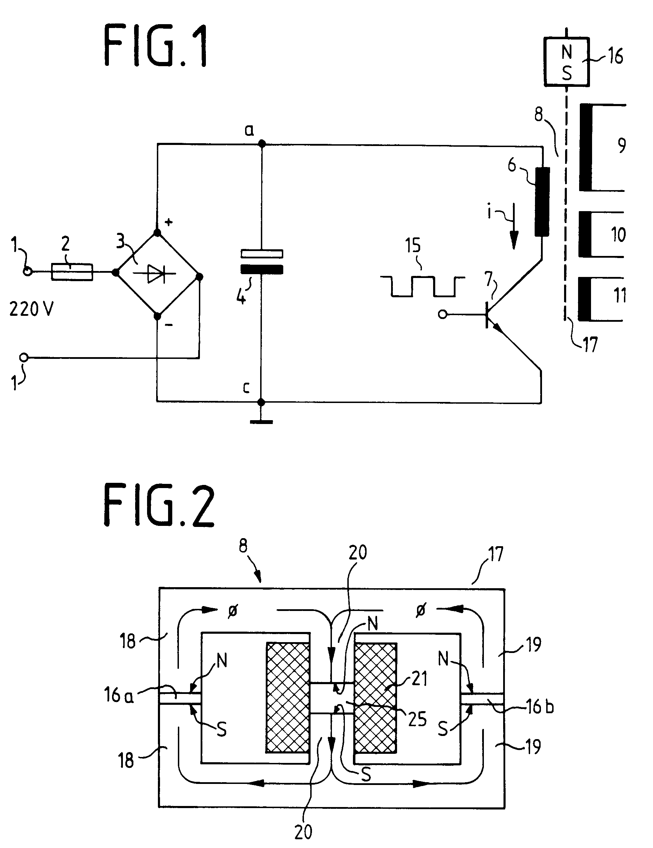

Fig. 1 zeigt zwei Netzklemmen 1, an die eine Wechselspannung von 200 V gelegt ist, eine Feinsicherung 2, einen Brückengleichrichter 3 und einen Ladekondensator 4, die in bekannter Weise zusammenwirken, um an den Klemmen a, c des Ladekondensators 4 eine im wesentlichen gleichgerichtete und geglättete Betriebsspannung bereitzustellen. Ein Strom i fließt von der Klemme a über die Primärwicklung 6 eines Schaltnetzteil-Transformators 8 und über die Kollektor-Emitter-Strecke eines Schalttransistors 7 zu der Klemme c des Ladekondensators 4, sofern der Schalttransistor 7 leitend gesteuert ist. Sekundärwicklungen 9, 10, 11 des Transformators 8 liefern geeignete Betriebsspannungen für nicht näher dargestellte Verbraucher, z.B. die Versorgungsspannung für eine Zeilenablenkschaltung in einem Fernsehempfänger oder dergleichen. Der Transformator 8 kann grundsätzlich in einer Zeilenendstufe oder auch in einem Schaltnetzteil enthalten sein.

Der Schalttransistor 7 wird von einer an seine Basis gelegten Schaltspannung 15 periodisch leitend bzw. gesperrt gesteuert. Der die Primärwicklung 67 durchfließende Strom i steigt jeweils sägezahnförmig an und fällt dann durch das periodisch erfolgende Sperren des Schalttransistors 7 im wesentlichen wieder auf null.

Der Transformator 8 enthält einen aus ferritischem Werkstoff gefertigten und in Fig. 1 schematisch durch eine gestrichelte Linie dargestellten Transformatorkern 17, der weiter unten näher beschriebene Permanentmagnete aufweist, in Fig. 1 schematisch angedeutet durch einen in den Weg des Transformatorkerns 17 eingefügten Permanentmagneten 16.

Fig. 2 zeigt in nicht maßstäblicher Teilschnittdarstellung eine Seitenaufsicht auf den erfindungsgemäßen Schaltnetzteil-Transformator 8. Der Transformatorkern 7 ist EE-förmig mit zwei Außenschenkel 18, 19 und einem Innenschenkel 20 ausgebildet, wobei jeder dieser Schenkel aus zwei etwa gleich großen Teilen besteht. Die beiden Außenschenkel 18, 19 weisen einen im wesentlichen rechteckigen, der Mittelschenkel 20 einen ungefähr kreisrunden Querschnitt auf, wobei der Flächeninhalt des letztgenannten etwa dem doppelten Betrag des erstgenannten Querschnittes entspricht. Ein Spulenkörper 21, der die in Fig. 1 dargestellten Wicklungen 6, 9, 10 11 enthält, ist rings um den Mittelschenkel 20 angeordnet und in Fig. 2 im Schnitt gezeigt.

Die jeweils einander zugeordneten Teilschenkel der beiden E-förmigen Hälften des Transformatorkerns 17 liegen nicht unmittelbar aneinander an. Die beiden Außenschenkel 18, 19 sind vielmehr über je einen Permanentmagneten 16a bzw. 16b, die beide gleichsinnig ausgerichtet sind, miteinander verbunden, beispielsweise miteinander unlösbar verklebt. Die Permanentmagnete 16a, 16b weisen jeweils eine Bauhöhe von etwa 0,33 mm und die Außenschenkel an diesen Stellen eine Spaltlänge von ebenfalls etwa 0,33 mm auf, gegebenenfalls erhöht um eine oder zwei Klebstoffschichten einer Schichtdicke von je etwa 0,01 mm.

Die beiden Teile des Mittelschenkels 20 trennt ein Luftspalt 25, der sich ungefähr im Zentrum des Spulenkörpers 21 erstreckt. Aufgrund der in die beiden Außenschenkel 18, 19 eingefügten Permanentmagnete 16a, 16b ist der Transformator kern 17, insbesondere im Breich der Außenschenkel 18, 19 durch einen magnetischen Fluß ∅ vormagnetisiert, so daß sich an den an den Luftspalt 25 angrenzenden und sich gegenüberstehenden Enden der beiden Hälften des Mittelschenkels 20 ein magnetischer Nord- bzw. Südpol N bzw. S gegenüberliegen.

Durch geeignete Vormagnetisierung des Transformatorkerns 17 mittels der Permanentmagnete 16a, 16b kann ein erheblicher Teil eines sonst ungenutzten Astes der Hysteresiskurve zumindest im Bereich der Außenschenkel 18, 19 ausgenutzt werden. Liegt die Spaltlänge des am Mittelschenkel 20 vorgesehenen Luftspaltes 25 - wie dies hier der Fall ist - in der Größenordnung von Millimetern, so weist der Mittelschenkel 20 in Bezug auf die Hysteriskurve gegenüber den Außenschenkeln 18, 19 eine erhebliche "Aussteuerungsreserve" auf, so daß es genügt, die Vormagnetisierung durch die Permanentmagnete 16a, 16b im wesentlichen auf die Außenschenkle 18, 19 und deren Sättigungsgrenze zu bemessen.

Der effektive Gesamtspalt des Transformatorkerns wird gebildet durch den im Bereich des Mittelschenkels 20 vorhandenen Luftspalt 25 und durch die wegen ihrer relativen Permeabilität $\mu_r$ von ungefähr 1 in dieser Hinsicht wie Luftspalte wirkenden Magnete 16a, 16b im Bereich der Außenschenkel 18, 19. Der größte Anteil des effektiven Gesamtspaltes entfällt also auf den im Bereich des Mittelschenkels 20 in den Weg des Transformatorkerns eingefügten Luftspalt 25. Ein großer Teil desjenigen magnetischen Streufeldes, das durch das Vorhandensein des Luftspalts 25 auftritt, verläuft daher in einem Bereich, in welchem der Spulenkörper 21 angeordnet ist und der somit ohnehin für andere Komponenten, die von den Streufeldern beeinträchtigt werden könnten, nicht zur Verfügung steht. Die genannten magnetischen Streufelder ändern sich in Abhängigkeit von der durch den Transformator 8 übertragenen Leistung, die ihrerseits entsprechend den angeschlossenen Verbrauchern, etwa einer Strahlstromerzeugungs- und einer HiFi-Endstufe eines Fernsehempfängers, erheblichen Schwankungen unterworfen sein kann.

Die gewünschte Vormagnetisierung, die mit Hilfe der in den Außenschenkeln 18, 19 angeordneten Permanentmagnete 16a, 16b erzielt wird, wäre im Prinzip am einfachsten mit einem in den Mittelschenkel 20 anstelle des Luftspalts 25 eingefügten einzigen Permanentmagneten zu erreichen, dessen magnetische Eigenschaften dort jedoch bei auftretenden Schaltungsfehlern durch zu hohe Ströme in einer der Spulen zerstört werden können. Wird daher zur Vermeidung dieser Zerströmung der Magnet im Mittelschenkel 20 ersetzt durch je einen Magneten 16a, 16b für die beiden Außenschenkel 18, 19 so muß die dadurch in diesen beiden Außenschenkeln durch die Permanentmagnete gebildete Unterbrechung des Transformatorkerns, die wie ein Luftspalt wirkt, in deren Nähe also beim Betrieb des Transformators 8 insbesondere im Takt der Schaltspannung 15 wechselnde magnetische Streufeler auftreten, in ihrer Höhe so klein wie möglich gewählt werden.

Aufgrund empirischer Untersuchungen wurde gefunden, daß bei einer Bauhöhe von ungefähr 0,33 mm für die Permanentmagnete 16a, 16b und einer Spaltlänge von ungefähr 1,33 mm für den Luftspalt 25 die genannten magnetischen Streufelder noch ohne störende Auswirkungen auf in einem Abstand von etwa 5 cm angeordnete Komponenten, beispielsweise eine Fabbildröhre eines Fernsehempfängers, bleiben. Gegenüber einem Transformatorkern ohne Permanentmagnete läßt sich bei der vorstehend beschriebenen Anordnung der Permanentmagnete 16a, 16b bei ansonsten gleichem Aufbau des Transformators eine Erhöhung der Nennleistung von etwa 200 Watt auf etwa 300 Watt erzielen.

Bei einem erprobten Ausführungsbeispiel hatten die dargestellten Bauteile folgende Werte:

| Ladekondensator 4: | 150 bis 220 μF |
| Primärwicklung 6: | 1 bis 2 mH |
| Betriebsspannung (a, c): | 320 V |
| Primärspitzenstrom i: | ca. 5 A |
| Schaltfrequenz (15): | ca. 16.000 Hz |
| Nennleistung: | ca. 300 W |
| Permanentmagnete 16a, 16b: | Höhe: | ca. 0,33 mm |
| | Querschnitt: | ca. 7 mm * 18 mm |
| | Fabrikat: | Valvo FXD 651 |
| Außenschenkel 18, 19: | Querschnitt: | ca. 7 mm * 18 mm |
| Mittelschenkel 20: | Durchmesser: | ca. 18 mm |
| Kernaußenabmessungen: | ca. 53 mm * 36 mm * 18 mm |

**Patentansprüche**

1. Elektrischer Wandler nach dem Sperr- oder nach dem Flußwanderprinzip, insbesondere Schaltnetzteil- und/oder Zeilentransformator für ein Fernsehgerät, mit einem im wesentlichen geschlossenen mehrschenkligen Kern, bei den außerhalb von von Spulen umschlossenen Stellen in den Weg des Kerns ein oder mehrere Permanentmagnete eingefügt sind, **dadurch gekennzeichnet,** daß der oder die Permanentmagnete (16a, 16b) eine Höhe von etwa 0,3 mm und der Kern (17) an dieser Stelle eine dieser Höhe etwa entsprechende Spaltlänge aufweist und daß ein an einem eine Spule aufweisenden Schenkel des Kern vorgesehener Luftspalt (25) eine Spaltlänge von etwa 1,3 mm aufweist.

2. Elektrischer Wandler nach Anspruch 1, dadurch gekennzeichnet, daß alle Spulen (6, 9, 10, 11) des Wandlers an demselben Schenkel (20) des Kerns (17) angeordnet sind.

3. Elektrischer Wandler nach Anspruch 2, dadurch gekennzeichnet, daß der Kern (17) im wesentlichen EE-förmig ausgebildet ist und die Spulen (6, 9, 10, 11) am Mittelschenkel (20) des Kerns (17) angeordnet sind.

4. Elektrischer Wandler nach einem der Anspruch 3, dadurch gekennzeichnet, daß zwei oder mehr Außenschenkel (18, 19) des Kerns (17) jeweils einen Permanentmagneten (16a, 16b) enthalten.

5. Elektrischer Wandler nach Anspruch 1, dadurch gekennzeichnet, daß der Kern im wesentlichen UU-förmig ausgebildet ist.

6. Elektrischer Wandler nach einem der Ansprüche 1 bis 5, dadurch gekennzeichnet, daß der oder die Permanentmagnete (16a, 16b) und gegebenenfalls der Luftspalt (25) im wesentlichen symmetrisch bezüglich einer oder mehr Spiegelsymmetrieebenen des Kerns (17) angeordnet sind.

7. Elektrischer Wandler nach einem der Ansprüche 1 bis 6, dadurch gekennzeichnet, daß die jeweiligen Außenflächen der Permanentmagnete (16a, 16b) und der betreffenden Schenkel (18, 19) des Kerns (17) miteinander ungefähr fluchten.

8. Elektrischer Wandler nach einem der Ansprüche 1 bis 7, dadurch gekennzeichnet, daß die Permanentmagnete bis auf eine nahezu verschwindende Spaltlänge allseits vom Kern eingeschlossen sind.

9. Elektrischer Wandler nach einem der Ansprüche 1 bis 8, dadurch gekennzeichnet, daß die Permanentmagnete mit dem Kern unlösbar verbunden, insbesondere mit ihm verklebt sind.

## Claims

1. An electrical converter according to the blocking or to the flow converting principle, more particularly a switched-mode power supply and/or line transformer for a television appliance, having a substantially closed multi-armed core, in which one or more permanent magnets are inserted into the path of the core outside locations surrounded by coils, **characterised in that** the permanent magnet or magnets (16a, 16b) have a height of about 0.3 mm and the core (17) at this location has a gap length corresponding to this height and that an air gap (25) which is provided on one arm of the core having a coil has a gap length of about 1.3 mm.

2. An electrical converter according to claim 1 **characterised in that** all coils (6,9,10,11) of the transducer are arranged on the same arm (20) of the core (17).

3. An electrical converter according to claim 2, **characterised in that** the core (17) is formed substantially in EE shape and the coils (6,9,10,11) are arranged on the centre arm (20) of the core (17).

4. An electrical converter according to claim 3 **characterised in that** two or more outer arms (18,19) of the core (17) each contain a permanent magnet (16a,16b).

5. An electrical converter according to claim 1, **characterised in that** the core is formed in substantially UU shape.

6. An electrical converter according to any one of claims 1 to 5, **characterised in that** the permanent magnet or magnets (16a,16b) and in some cases the air gap (25) are arranged substantially symmetrically with respect to one or more mirror symmetry planes of the core (17).

7. An electrical converter according to any one of claims 1 to 6, **characterised in that** the respective outer surfaces of the permanent magnets (16a, 16b) and the respective arms (18,19) of the core (17) are approximately flush with each other.

8. An electrical converter according to any one of claims 1 to 7, **characterised in that** the permanent magnets are enclosed on all sides by the core up to an almost vanishing gap length.

9. An electrical converter according to any one of claims 1 to 8, **characterised in that** the permanent magnets are connected inseparably to the core, more particularly are adhered thereto.

## Revendications

1. Transformateur électrique selon le principe du convertisseur bloqué ou convertisseur de flux, en particulier transformateur de bloc d'alimentation et de commutation et/ou transformateur de lignes pour un appareil de télévision, avec un noyau à plusieurs branches substantiellement fermé, dans lequel un ou plusieurs aimants permanents sont insérés dans le parcours du noyau à l'extérieur d'endroits entourés par des bobines, **caractérisé en ce** que l'aimant permanent ou les aimants permanents (16a, 16b) présentent une hauteur d'environ 0,3 mm et le noyau (17) à cet endroit une longueur d'etnrefer qui correspond à peu près à cette hauteur et qu'un entrefer (25) prévu sur une branche du noyau qui présente une bobine présente une longueur d'entrefer d'environ 1,3 mm.

2. Transformateur électrique selon la revendication 1, **caractérisé en ce** que toutes les bobines (6, 9, 10, 11) du transformateur sont placées sur la même branche (20) du noyau (17).

3. Transformateur électrique selon la revendication 2, **caractérisé en ce** que le noyau (17) est configuré essentiellement en forme de EE et que les bobines (6, 9, 10, 11) sont placées sur la branche du milieu (20) du noyau (17).

4. Transformateur électrique selon la revendication 3, **caractérisé en ce** que deux branches extérieures (18, 19) ou davantage de branches extérieures du noyau (17) contiennent chacune un amant permanent (16a, 16b).

**5.** Transformateur électrique selon la revendication 1, **caractérisé en ce** que le noyau est configuré en étant substantiellement en forme d'UU.

**6.** Transformateur électrique selon l'une des revendications 1 à 5, **caractérisé en ce** que l'aimant permanent ou les aimants permanents (16a, 16b) et le cas échéant l'entrefer (25) sont placés substantiellement symétriquement par rapport à un ou plusieurs plans de symétrie réfléchie du noyau (17).

**7.** Transformateur électrique selon l'une des revendications 1 à 6. **caractérisé en ce** que les surfaces extérieures respectives des amants permanents (16a, 16b) et les branches concernées (18, 19) du noyau (17) sont approximativement alignées l'une sur l'autre.

**8.** Transformateur électrique selon l'une des revendications 1 à 7, **caractérisé en ce** que les amants permanents sont renfermés de tous côtés par le noyau à part une longueur d'entrefer presqu'infiniment petite.

**9.** Transformateur électrique selon l'une des revendications 1 à 8, **caractérisé en ce** que les aimants permanents sont reliés de manière indétachable au noyau, en particulier qu'ils lui sont collés.

# FIG.1

# FIG.2